# EUROPEAN PATENT APPLICATION

(11) **EP 3 139 662 A1**
(43) Date of publication of application: **08.03.2017**
(21) Application number: 14893366.6
(22) Date of filing: 30.05.2014
(51) Int. Cl.: H04W 36/26, H04W 36/00, H04W 28/16

(54) **HANDOVER METHOD, BEARER SETUP METHOD, BASE STATION, AND TERMINAL**

(71) Applicant: Huawei Technologies Co. Ltd., Shenzhen, Guangdong 518129 (CN)
(72) Inventor: HU, Zhenxing, Shenzhen Guangdong 518129 (CN); LI, Bingzhao, Shenzhen Guangdong 518129 (CN); QUAN, Wei, Shenzhen Guangdong 518129 (CN); YANG, Xiaodong, Shenzhen Guangdong 518129 (CN); ZHANG, Jian, Shenzhen Guangdong 518129 (CN)
(74) Representative: Maiwald Patentanwalts GmbH
(86) International application number: PCT/CN2014/078947
(87) International publication number: WO 2015/180143

(57) **Abstract**

The present invention provides a handover method, a bearer setup method, a base station, and a terminal, to resolve a problem of a cell handover failure rate increase in the prior art. The handover method includes: receiving, by a terminal, measurement configuration information sent by a source base station, where the measurement configuration information is used by the terminal to perform cell measurement; performing, by the terminal, cell measurement according to the measurement configuration information; sending, by the terminal, a cell measurement result to the source base station when the terminal satisfies a measurement report condition; receiving, by the terminal, a handover configuration message that is sent by the source base station according to the cell measurement result, where the handover configuration message carries handover configuration information, and the handover configuration information is used by the terminal to perform cell handover; and performing, by the terminal, cell handover according to the handover configuration information when the terminal receives a handover instruction message that is sent by the source base station when the source base station determines that the terminal needs to perform cell handover, where the handover instruction message is used to instruct the terminal to perform cell handover according to the handover configuration information, and a length of the handover instruction message is less than a length of the handover configuration message.

## Description

### TECHNICAL FIELD

The present invention relates to the field of communications technologies, and in particular, to a handover method, a bearer setup method, a base station, and a terminal.

### BACKGROUND

In an existing 3GPP (The 3rd Generation Partnership Project) standard, a cell handover procedure of a terminal includes: a source base station that provides an access service for the terminal sends a measurement control message to the terminal. The measurement control message carries measurement configuration information used for cell measurement. The terminal performs measurement according to the measurement configuration information, and when determining that a measurement condition is satisfied, the terminal sends a measurement report message to the source base station. The measurement report message carries a cell measurement result. If the source base station determines, according to the measurement result reported by the terminal, that the terminal needs to perform handover, the source base station obtains configuration information of a target cell, and then sends the obtained configuration information of the target cell to the terminal. After receiving the configuration information of the target cell, the terminal performs handover from a source cell of the source base station to the target cell.

For a high-speed movement scenario, a moving speed of a terminal is extremely high, and a relatively large Doppler frequency shift is generated. Consequently, a channel changes extremely fast. In this case, handover is performed according to the foregoing handover process, that is, the terminal immediately performs handover after receiving handover configuration information of a target cell. Because the handover configuration information is relatively large, when the channel changes relatively fast, time required for receiving the handover configuration information is longer, or the handover configuration information even fails to be received, which leads to a cell handover failure rate increase.

### SUMMARY

The present invention provides a handover method, a bearer setup method, a base station, and a terminal, to resolve a problem of a cell handover failure rate increase in the prior art.

According to a first aspect, the present invention provides a terminal, where the terminal includes a receiving module, a measurement module, a sending module, and a handover module;
the receiving module is configured to receive measurement configuration information sent by a source base station, where the measurement configuration information is used by the terminal to perform cell measurement;
the measurement module is configured to perform cell measurement according to the measurement configuration information;
the sending module is configured to send a cell measurement result to the source base station when a measurement report condition is satisfied;
the receiving module is further configured to receive handover configuration information and handover condition information that are sent by the source base station according to the cell measurement result, where the handover configuration information is used by the terminal to perform cell handover, and the handover condition information is used to indicate a handover condition for performing cell handover by the terminal according to the handover configuration information; and
the handover module is configured to perform cell handover according to the handover configuration information when the terminal satisfies the handover condition indicated by the handover indication information.

In a high-speed movement scenario, affected by a Doppler frequency shift, a channel state changes relatively fast. By means of this solution of the present invention, when receiving handover configuration information, a terminal does not perform handover immediately, and performs handover only when determining that the terminal satisfies a handover condition. Therefore, when performing handover, the terminal has already received the handover configuration information in advance, and does not need to interact signaling with a source base station, thereby avoiding an impact caused to a handover process by a rapid change of the channel state, and reducing a handover failure rate increase.

With reference to the first aspect, in a first possible implementation manner of the first aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the first aspect or the first possible implementation manner of the first aspect, in a second possible implementation manner of the first aspect, the terminal further includes a judging module;
before the sending module sends a measurement report message to the source base station, the judging module is configured to: when a moving speed of the terminal reaches a specified speed threshold, or when a moving speed of the terminal reaches a specified speed threshold and duration in which the moving speed of the terminal reaches the specified speed threshold reaches specified duration, determine that the terminal is in a high-speed moving state; and
the sending module is further configured to send a high speed indication indicating that the terminal is in the high-speed moving state to the source base station.

According to a second aspect, the present invention further provides a terminal, where the terminal includes:
a receiving module, a measurement module, a sending module, and a handover module, where
the receiving module is configured to receive measurement configuration information sent by a source base station, where the measurement configuration information is used by the terminal to perform cell measurement;
the measurement module is configured to perform cell measurement according to the measurement configuration information;
the sending module is configured to send a cell measurement result to the source base station when a measurement report condition is satisfied;
the receiving module is further configured to receive a handover configuration message that is sent by the source base station according to the cell measurement result, where the handover configuration message carries handover configuration information, and the handover configuration information is used by the terminal to perform cell handover; and
the handover module is configured to perform, by the terminal, cell handover according to the handover configuration information when the terminal receives a handover instruction message that is sent by the source base station when the source base station determines that the terminal needs to perform cell handover, where the handover instruction message is used to instruct the terminal to perform cell handover according to the handover configuration information, and a length of the handover instruction message is less than a length of the handover configuration message.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

With reference to the second aspect, in a first possible implementation manner of the second aspect, the handover configuration message further carries handover condition information, the handover condition information is used to indicate a handover condition for performing cell handover by the terminal according to the handover configuration information, and the sending module is further configured to send a handover request message to the source base station when determining that the terminal satisfies the handover condition; and
the receiving module is further configured to receive the handover instruction message that is sent by the source base station when the source base station receives the handover request message sent by the terminal.

With reference to the first possible implementation manner of the second aspect, in a second possible implementation manner of the second aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the second aspect or either of the first and the second possible implementation manners of the second aspect, in a third possible implementation manner of the second aspect, the terminal further includes a judging module;
before the sending module sends the cell measurement result to the source base station, the judging module is configured to: when a moving speed of the terminal reaches a specified speed threshold, or when a moving speed of the terminal reaches a specified speed threshold and duration in which the moving speed of the terminal reaches the specified speed threshold reaches specified duration, determine that the terminal is in a high-speed moving state; and
the sending module is further configured to send a high speed indication indicating that the terminal is in the high-speed moving state to the source base station.

According to a third aspect, the present invention further provides a base station, where the base station includes a sending module and a receiving module, where
the sending module is configured to send measurement configuration information to a terminal, where the measurement configuration information is used by the terminal to perform cell measurement;
the receiving module is configured to: receive a measurement report message that is sent by the terminal when the terminal satisfies a measurement report condition, and obtain handover configuration information of a target cell, where the measurement report message carries a cell measurement result; and
the sending module is further configured to send the handover configuration information and handover condition information to the terminal, where the handover configuration information is used by the terminal to perform cell handover, and the handover condition information is used to indicate a handover condition for performing cell handover by the terminal according to the handover configuration information, so that the terminal satisfies the handover condition indicated by the handover indication information, and performs cell handover according to the received handover configuration information.

In a high-speed movement scenario, affected by a Doppler frequency shift, a channel state changes relatively fast. By means of this solution of the present invention, when receiving handover configuration information, a terminal does not perform handover immediately, and performs handover only when determining that the terminal satisfies a handover condition. Therefore, when performing handover, the terminal has already received the handover configuration information in advance, and does not need to interact signaling with a source base station, thereby avoiding an impact caused to a handover process by a rapid change of the channel state, and reducing a handover failure rate increase.

With reference to the third aspect, in a first possible implementation manner of the third aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the third aspect or the first possible implementation manner of the third aspect, in a second possible implementation manner of the third aspect, the receiving module is further configured to:
before receiving the measurement report message that is sent by the terminal when the terminal satisfies the measurement report condition, receive a high speed indication that is sent by the terminal and that is of the high-speed moving state, where the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

According to a fourth aspect, the present invention further provides a base station, where the base station includes a sending module and a receiving module, where
the sending module is configured to send a measurement control message to a terminal, where the measurement control message carries measurement configuration information, and the measurement configuration information is used by the terminal to perform cell measurement;
the receiving module is configured to: receive a measurement report message that is sent by the terminal when the terminal satisfies a measurement report condition, and obtain handover configuration information of a target cell, where the measurement report message carries a cell measurement result;
the sending module is further configured to send a handover configuration message to the terminal, where the handover configuration message carries the handover configuration information, and the handover configuration information is used by the terminal to perform cell handover;
the determining module is further configured to determine that the terminal needs to perform cell handover; and
the sending module is further configured to send a handover instruction message to the terminal when it is determined that the terminal needs to perform cell handover, so that the terminal performs cell handover according to the handover configuration information, where the handover instruction message is used to instruct the terminal to perform cell handover according to the handover configuration information, and a length of the handover instruction message is less than a length of the handover configuration message.

With reference to the fourth aspect, in a first possible implementation manner of the fourth aspect, the handover configuration message further carries handover condition information, and the handover condition information is used to indicate a handover condition for performing cell handover by the terminal according to the handover configuration information;
the receiving module is further configured to receive a handover request message sent by the terminal;
the determining module is further configured to: when the receiving module receives the handover request message sent by the terminal, determine that the terminal needs to perform cell handover; and
the sending module is configured to send the handover instruction message to the terminal, where the handover request message is sent by the terminal to the source base station when determining that the terminal satisfies the handover condition.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

With reference to the first possible implementation manner of the fourth aspect, in a second possible implementation manner of the fourth aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the fourth aspect or either of the first and the second possible implementation manners of the fourth aspect, in a third possible implementation manner of the fourth aspect, the receiving module is further configured to:
before receiving the cell measurement result sent by the terminal, receive a high speed indication that is sent by the terminal and that is of a high-speed moving state, where the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

According to a fifth aspect, the present invention further provides a terminal, where the terminal includes a judging module and a sending module, where
indication information is sent to a mobility management entity MME when it is determined that a bearer of a delay-sensitive service needs to be set up, where the indication information is used to indicate that the bearer of the delay-sensitive service needs to be set up, so that after receiving the indication information sent by the MME, a base station sets up the bearer of the delay-sensitive service, and the bearer of the delay-sensitive service is not actively released by the base station.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

According to a sixth aspect, the present invention further provides a base station, where the base station includes a receiving module and a bearer setup module, where
the receiving module is configured to receive indication information indicating that a terminal needs to set up a bearer of a delay-sensitive service; and
the bearer setup module is configured to set up the bearer of the delay-sensitive service with the terminal according to the received indication information, and the bearer of the delay-sensitive service is not actively released.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

According to a seventh aspect, the present invention further provides a handover method, where the handover method includes:
receiving, by a terminal, measurement configuration information sent by a source base station, where the measurement configuration information is used by the terminal to perform cell measurement;
performing, by the terminal, cell measurement according to the measurement configuration information;
sending, by the terminal, a cell measurement result to the source base station when the terminal satisfies a measurement report condition;
receiving, by the terminal, handover configuration information and handover condition information that are sent by the source base station according to the cell measurement result, where the handover configuration information is used by the terminal to perform cell handover, and the handover condition information is used to indicate a handover condition for performing cell handover by the terminal according to the handover configuration information; and
performing, by the terminal, cell handover according to the handover configuration information when the terminal satisfies the handover condition indicated by the handover indication information.

In a high-speed movement scenario, affected by a Doppler frequency shift, a channel state changes relatively fast. By means of this solution of the present invention, when receiving handover configuration information, a terminal does not perform handover immediately, and performs handover only when determining that the terminal satisfies a handover condition. Therefore, when performing handover, the terminal has already received the handover configuration information in advance, and does not need to interact signaling with a source base station, thereby avoiding an impact caused to a handover process by a rapid change of the channel state, and reducing a handover failure rate increase.

With reference to the seventh aspect, in a first possible implementation manner of the seventh aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the seventh aspect or the first possible implementation manner of the seventh aspect, in a second possible implementation manner of the seventh aspect, before the sending a cell measurement result to the source base station, the method further includes:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

According to an eighth aspect, the present invention further provides a handover method, where the handover method includes:
receiving, by a terminal, measurement configuration information sent by a source base station, where the measurement configuration information is used by the terminal to perform cell measurement;
performing, by the terminal, cell measurement according to the measurement configuration information;
sending, by the terminal, a cell measurement result to the source base station when the terminal satisfies a measurement report condition;
receiving, by the terminal, a handover configuration message that is sent by the source base station according to the cell measurement result, where the handover configuration message carries handover configuration information, and the handover configuration information is used by the terminal to perform cell handover; and
performing, by the terminal, cell handover according to the handover configuration information when the terminal receives a handover instruction message that is sent by the source base station when the source base station determines that the terminal needs to perform cell handover, where the handover instruction message is used to instruct the terminal to perform cell handover according to the handover configuration information, and a length of the handover instruction message is less than a length of the handover configuration message.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

With reference to the eighth aspect, in a first possible implementation manner of the eighth aspect, the handover configuration message further carries handover condition information, the handover condition information is used to indicate a handover condition for performing cell handover by the terminal according to the handover configuration information, and the method further includes:
sending a handover request message to the source base station when determining that the terminal satisfies the handover condition; and
that the terminal receives a handover instruction message that is sent by the source base station when the source base station determines that the terminal needs to perform cell handover specifically includes:
   receiving, by the terminal, the handover instruction message that is sent by the source base station when the source base station receives the handover request message sent by the terminal.

With reference to the first possible implementation manner of the eighth aspect, in a second possible implementation manner of the eighth aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the eighth aspect or either of the first and the second possible implementation manners of the eighth aspect, in a third possible implementation manner of the eighth aspect, before the sending a cell measurement result to the source base station, the method further includes:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

According to a ninth aspect, the present invention further provides a handover method, where the handover method includes:
sending, by a source base station, a measurement control message to a terminal, where the measurement control message carries measurement configuration information, and the measurement configuration information is used by the terminal to perform cell measurement;
receiving, by the source base station, a measurement report message that is sent by the terminal when the terminal satisfies a measurement report condition, and obtaining handover configuration information of a target cell, where the measurement report message carries a cell measurement result; and
sending, by the source base station, the handover configuration information and handover condition information to the terminal, where the handover configuration information is used by the terminal to perform cell handover, and the handover condition information is used to indicate a handover condition for performing cell handover by the terminal according to the handover configuration information, so that the terminal satisfies the handover condition indicated by the handover indication information, and performs cell handover according to the received handover configuration information.

In a high-speed movement scenario, affected by a Doppler frequency shift, a channel state changes relatively fast. By means of this solution of the present invention, when receiving handover configuration information, a terminal does not perform handover immediately, and performs handover only when determining that the terminal satisfies a handover condition. Therefore, when performing handover, the terminal has already received the handover configuration information in advance, and does not need to interact signaling with a source base station, thereby avoiding an impact caused to a handover process by a rapid change of the channel state, and reducing a handover failure rate increase.

With reference to the ninth aspect, in a first possible implementation manner of the ninth aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the ninth aspect or the first possible implementation manner of the ninth aspect, in a second possible implementation manner of the ninth aspect, before the receiving, by the source base station, a measurement report message that is sent by the terminal when the terminal satisfies a measurement report condition, the method further includes:
receiving a high speed indication that is sent by the terminal and that is of the high-speed moving state, where the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

According to a tenth aspect, the present invention further provides a handover method, where the handover method includes:
sending, by a source base station, measurement configuration information to a terminal, where the measurement configuration information is used by the terminal to perform cell measurement;
receiving, by the source base station, a measurement report message that is sent by the terminal when the terminal satisfies a measurement report condition, and obtaining handover configuration information of a target cell, where the measurement report message carries a cell measurement result;
sending, by the source base station, a handover configuration message to the terminal, where the handover configuration message carries the handover configuration information, and the handover configuration information is used by the terminal to perform cell handover; and
sending, by the source base station, a handover instruction message to the terminal when the base station determines that the terminal needs to perform cell handover, so that the terminal performs cell handover according to the handover configuration information, where the handover instruction message is used to instruct the terminal to perform cell handover according to the handover configuration information, and a length of the handover instruction message is less than a length of the handover configuration message.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

With reference to the tenth aspect, or in a first possible implementation manner of the tenth aspect, the handover configuration message further carries handover condition information, and the handover condition information is used to indicate a handover condition for performing cell handover by the terminal according to the handover configuration information; and
the sending, by the source base station, a handover instruction message to the terminal when the base station determines that the terminal needs to perform cell handover includes:
receiving, by the source base station, a handover request message sent by the terminal, determining that the terminal needs to perform cell handover, and sending the handover instruction message to the terminal, where the handover request message is sent by the terminal to the source base station when determining that the terminal satisfies the handover condition.

With reference to the first possible implementation manner of the tenth aspect, in a second possible implementation manner of the tenth aspect, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

With reference to the tenth aspect or either of the first and the second possible implementation manners of the tenth aspect, in a third possible implementation manner of the tenth aspect, before the measurement report message is sent to the source base station when it is determined that a measurement condition is satisfied, the method further includes:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

According to an eleventh aspect, the present invention further provides a bearer setup method, where the method includes:
sending indication information to a mobility management entity MME when it is determined that a bearer of a delay-sensitive service needs to be set up, where the indication information is used to indicate that the bearer of the delay-sensitive service needs to be set up, so that after receiving the indication information sent by the MME, a base station sets up the bearer of the delay-sensitive service, and the bearer of the delay-sensitive service is not actively released by the base station.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

According to a twelfth aspect, the present invention further provides a bearer setup method, where the method includes:
receiving indication information indicating that a terminal needs to set up a bearer of a delay-sensitive service; and
setting up the bearer of the delay-sensitive service with the terminal according to the received indication information, where the bearer of the delay-sensitive service is not actively released.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

### BRIEF DESCRIPTION OF DRAWINGS

FIG. 1 is a schematic structural diagram of a first terminal according to an embodiment of the present invention;
FIG. 2 is a schematic structural diagram of a second terminal according to an embodiment of the present invention;
FIG. 3 is a schematic structural diagram of a third terminal according to an embodiment of the present invention;
FIG. 4 is a schematic structural diagram of a fourth terminal according to an embodiment of the present invention;
FIG. 5 is a schematic structural diagram of a fifth terminal according to an embodiment of the present invention;
FIG. 6 is a schematic structural diagram of a sixth terminal according to an embodiment of the present invention;
FIG. 7 is a schematic structural diagram of a first base station according to an embodiment of the present invention;
FIG. 8 is a schematic structural diagram of a second base station according to an embodiment of the present invention;
FIG. 9 is a schematic structural diagram of a third base station according to an embodiment of the present invention;
FIG. 10 is a schematic structural diagram of a fourth base station according to an embodiment of the present invention;
FIG. 11 is a schematic structural diagram of a fifth base station according to an embodiment of the present invention;
FIG. 12 is a schematic structural diagram of a sixth base station according to an embodiment of the present invention;
FIG. 13 is a flowchart of a first handover method according to an embodiment of the present invention;
FIG. 14 is a flowchart of a second handover method according to an embodiment of the present invention;
FIG. 15 is a flowchart of a third handover method according to an embodiment of the present invention; and
FIG. 16 is a flowchart of a fourth handover method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions provided in the embodiments of the present invention may be applied to various communications systems such as a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless) system, a general packet radio service (GPRS, General Packet Radio Service) system, and a Long Term Evolution (LTE, Long Term Evolution) system.

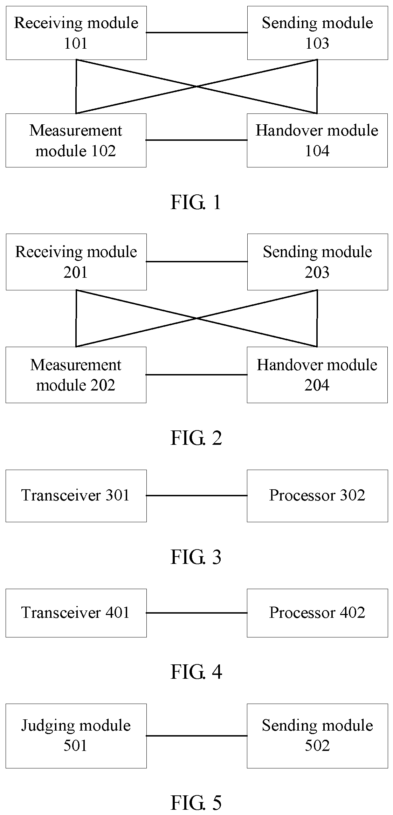

An embodiment of the present invention provides a terminal. As shown in FIG. 1, the terminal includes a receiving module 101, a measurement module 102, a sending module 103, and a handover module 104.

The receiving module 101 is configured to receive measurement configuration information sent by a source base station, where the measurement configuration information is used by the terminal to perform cell measurement.

The foregoing measurement configuration information may be carried in a measurement control message for sending.

The measurement module 102 is configured to perform cell measurement according to the measurement configuration information.

Cell measurement includes measurement (which is usually measurement on RSRP and RSRQ) on a source cell serving the terminal, and a neighboring cell of the source cell.

The sending module 103 is configured to send a cell measurement result to the source base station when a measurement report condition is satisfied.

The foregoing cell measurement result may be carried in a measurement report message for sending.

If measurement report events include events A1 to A5, and events B1 and B2, satisfying the measurement report condition is satisfying the events A1 to A5 and the events B1 and B2. Then, the terminal reports the cell measurement result to the source base station, and the source base station determines, according to the cell measurement result, whether to perform handover.

For example, when the measured signal quality of the neighboring cell is greater than signal quality of a target cell, the source base station determines that the terminal needs to perform handover.

The receiving module 101 is further configured to receive a handover configuration message and handover condition information that are sent by the source base station according to the cell measurement result, where the handover configuration information is used by the terminal to perform cell handover, and the handover condition information is used to indicate a handover condition for performing cell handover by the terminal according to the handover configuration information.

The handover module 104 is configured to perform cell handover according to the handover configuration information when the terminal satisfies the handover condition indicated by the handover indication information.

The foregoing performing cell handover is handing over from the source cell of the source base station to the target cell according to the handover configuration information.

The handover configuration message may be an RRC (Radio Resource Control, Radio Resource Control) connection reconfiguration message carrying mobile control information.

The terminal provided above may be a mobile terminal such as a mobile telephone (or referred to as a "cellular" telephone), or may be a portable computer, for example, may be a portable, pocket, or handheld computer, which is not specifically limited in this embodiment of the present invention.

The handover from the source cell to the target cell according to the handover configuration information may be disconnecting from the source cell, and accessing the target cell according to the handover configuration information.

In a high-speed movement scenario, affected by a Doppler frequency shift, a channel state changes relatively fast. By means of this solution of the present invention, when receiving handover configuration information, a terminal does not perform handover immediately, and performs handover only when determining that the terminal satisfies a handover condition. Therefore, when performing handover, the terminal has already received the handover configuration information in advance, and does not need to interact signaling with a source base station, thereby avoiding an impact caused to a handover process by a rapid change of the channel state, and reducing a handover failure rate increase.

Preferably, the handover condition includes at least one of the following conditions:
a preset handover execution time point;
a time point corresponding to a current time point after a preset handover execution time offset value is added to the current time point;
a first preset threshold that needs to be reached by a reference signal received power (RSRP) value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality (RSRQ) value of a signal received by the terminal; and
a fourth preset threshold that needs to be reached by a difference between an RSRQ value of a signal most recently received by the terminal and an RSRQ value of a previously received signal.

Based on any implementation manner of the foregoing method embodiment, preferably, the terminal is applied to the high-speed movement scenario. The terminal further includes a judging module, and a manner in which the judging module determines that the terminal is in a high-speed moving state includes but is not limited to the following two implementation manners:

In a first implementation manner, before the sending module sends the cell measurement result to the source base station, when a moving speed of the terminal reaches a specified speed threshold, the judging module determines that the terminal is in the high-speed moving state; and the sending module is further configured to send a high speed indication indicating that the terminal is in the high-speed moving state to the source base station.

It is determined that the terminal is in the high-speed moving state that is referred to as high-speed movement for short in the following.

When the foregoing source base station receives the high speed indication sent by the terminal and indicating that the terminal is in the high-speed moving state, the foregoing source base station triggers the terminal to send the cell measurement result, so that the source base station sends the handover configuration message and the handover condition information according to the cell measurement result.

Preferably, for the first implementation manner of determining whether it is the high-speed movement, two speed thresholds may be set naming a first speed threshold and a second speed threshold. The first speed threshold is greater than the second speed threshold. A default moving state is low-speed movement. When determining that the moving speed reaches the first speed threshold, the judging module determines that it is the high-speed movement, and the sending module 103 sends the high speed indication to the source base station. When the moving speed decreases and is not greater than the second speed threshold, the judging module determines that it is the low-speed movement, and the sending module 103 may send a low speed indication to the source base station.

Certainly, alternatively, there may be only one speed threshold. A default moving state is low-speed movement. When determining that the moving speed reaches (is greater than) the speed threshold, the judging module determines that it is the high-speed movement, and the sending module 103 sends the high speed indication to the source base station; and when the moving speed decreases and is not greater than the speed threshold, the judging module determines that it is the low-speed movement, and a low speed indication may be sent to the source base station.

In a second implementation manner, when a moving speed reaches a speed threshold, and duration in which the moving speed reaches the speed threshold reaches a time threshold, the judging module determines that it is the high-speed movement, and the sending module 103 sends the high speed indication to the source base station.

Preferably, for the second implementation manner of determining whether it is the high-speed movement, when the moving speed decreases and is not greater than the speed threshold, the judging module determines it is low-speed movement, and the sending module 103 sends a low speed indication to the source base station. Alternatively, when a time threshold is exceeded after the sending module 103 sends the high-speed indication to the source base station, if the moving speed decreases and is not greater than the speed threshold, the sending module 103 sends a low speed indication to the source base station.

The speed threshold for determining the high-speed movement and the speed threshold for determining the low-speed movement may be a same threshold, or may be different thresholds.

The time threshold for determining the high-speed movement and the time threshold for determining the low speed indication may be a same threshold, or may be different thresholds.

If "reach" used in determining the high-speed movement represents "greater than", "not less than" is used in determining the low-speed movement. If "reach" used in determining the high-speed movement represents "not less than", "greater than" is used in determining the low-speed movement.

The foregoing high speed indication may be physical layer signaling, MAC layer signaling, RRC signaling, or the like.

Preferably, the speed threshold and the time threshold may be sent by the source base station, or may be pre-specified with a base station, which is not specifically limited in this embodiment of the present invention.

An embodiment of the present invention provides a terminal. As shown in FIG. 2, the terminal includes a receiving module 201, a measurement module 202, a sending module 203, and a handover module 204.

The receiving module 201 is configured to receive measurement configuration information sent by a source base station, where the measurement configuration information is used by the terminal to perform cell measurement.

The measurement module 202 is configured to perform cell measurement according to the measurement configuration information.

The sending module 203 is configured to send a cell measurement result to the source base station when a measurement report condition is satisfied.

The receiving module 201 is further configured to receive a handover configuration message that is sent by the source base station according to the cell measurement result, where the handover configuration message carries handover configuration information, and the handover configuration information is used by the terminal to perform cell handover.

The handover module 204 is configured to perform, by the terminal, cell handover according to the handover configuration information when the terminal receives a handover instruction message that is sent by the source base station when the source base station determines that the terminal needs to perform cell handover, where the handover instruction message is used to instruct the terminal to perform cell handover according to the handover configuration information, and a length of the handover instruction message is less than a length of the handover configuration message.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

The foregoing handover instruction message may be physical layer signaling, MAC (Medium Access Control, Medium Access Control) layer control signaling, RRC signaling, or the like.

Preferably, the handover configuration message further carries handover condition information, and the handover condition information is used to indicate a handover condition for performing cell handover by the terminal according to the handover configuration information. The sending module 203 is further configured to send a handover request message to the source base station when determining that the terminal satisfies the handover condition.

The receiving module is further configured to receive the handover instruction message that is sent by the source base station when the source base station receives the handover request message sent by the terminal.

Preferably, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

Based on any implementation manner of the foregoing method embodiment, preferably, the terminal is applied to the high-speed movement scenario. The terminal further includes a judging module. Before the sending module sends the cell measurement result to the source base station, the judging module is configured to: when a moving speed of the terminal reaches a specified speed threshold, or when a moving speed of the terminal reaches a specified speed threshold and duration in which the moving speed of the terminal reaches the specified speed threshold reaches specified duration, determine that the terminal is in a high-speed moving state. The sending module is further configured to send a high speed indication indicating that the terminal is in the high-speed moving state to the source base station.

When the foregoing source base station receives the high speed indication sent by the terminal and indicating that the terminal is in the high-speed moving state, the foregoing source base station triggers the terminal to send the cell measurement result, so that the source base station sends the handover configuration information and the handover condition information according to the cell measurement result.

Preferably, for the first implementation manner of determining whether it is high-speed movement, two speed thresholds may be set. The two speed thresholds are named a first speed threshold and a second speed threshold. The first speed threshold is greater than the second speed threshold. A default moving state is low-speed movement. When determining that the moving speed reaches the first speed threshold, the judging module determines that it is the high-speed movement, and the sending module 203 sends the high speed indication to the source base station. When the moving speed decreases and is not greater than the second speed threshold, the judging module determines that it is the low-speed movement, and the sending module 203 may send a low speed indication to the source base station.

Certainly, alternatively, there may be only one speed threshold. A default moving state is low-speed movement. When determining that the moving speed reaches (is greater than) the speed threshold, the judging module determines that it is the high-speed movement, and the sending module 203 sends the high speed indication to the source base station; and when the moving speed decreases and is not greater than the speed threshold, the judging module determines that it is the low-speed movement, and a low speed indication may be sent to the source base station.

In a second implementation manner, when a moving speed reaches a speed threshold, and duration in which the moving speed reaches the speed threshold reaches a time threshold, the judging module determines that it is high-speed movement, and the sending module 203 sends a high speed indication to the source base station.

Preferably, for the second implementation manner of determining whether it is the high-speed movement, when the moving speed decreases and is not greater than the speed threshold, the judging module determines it is low-speed movement, and the sending module 203 sends a low speed indication to the source base station. Alternatively, when a time threshold is exceeded after the sending module 203 sends the high-speed indication to the source base station, if the moving speed decreases and is not greater than the speed threshold, the sending module 203 sends a low speed indication to the source base station.

The speed threshold for determining the high-speed movement and the speed threshold for determining the low-speed movement may be a same threshold, or may be different thresholds.

The time threshold for determining the high-speed movement and the time threshold for determining the low speed indication may be a same threshold, or may be different thresholds.

If "reach" used in determining the high-speed movement represents "greater than", "not less than" is used in determining the low-speed movement. If "reach" used in determining the high-speed movement represents "not less than", "greater than" is used in determining the low-speed movement.

The foregoing high speed indication may be physical layer signaling, MAC layer signaling, RRC signaling, or the like.

Preferably, the speed threshold and the time threshold may be sent by the source base station, or may be pre-specified with a base station, which is not specifically limited in this embodiment of the present invention.

An embodiment of the present invention provides a terminal. As shown in FIG. 3, the terminal includes a transceiver 301 and a processor 302.

The transceiver 301 receives measurement configuration information sent by a source base station.

The foregoing measurement control message may be carried in a measurement control message for sending.

The processor 302 performs cell measurement according to the measurement configuration information, and when a measurement report condition is satisfied, controls the transceiver 201 to send a measurement report message to the source base station, where the measurement report message carries a cell measurement result. The transceiver 201 receives handover configuration information and handover condition information that are sent by the source base station according to the cell measurement result, where the handover configuration information is used by the terminal to perform cell handover, and the handover condition information is used to indicate a handover condition for performing cell handover by the terminal according to the handover configuration information.

The processor 302 performs cell handover according to the handover configuration information when the terminal satisfies the handover condition indicated by the handover indication information.

The handover configuration information and the handover condition information may be carried in the handover configuration information and sent together, or may be separately sent. The handover configuration message may be an RRC (Radio Resource Control, Radio Resource Control) connection reconfiguration message carrying mobile control information.

The terminal provided above may be a mobile terminal such as a mobile telephone (or referred to as a "cellular" telephone), or may be a portable computer, for example, may be a portable, pocket, or handheld computer, which is not specifically limited in this embodiment of the present invention.

The foregoing cell handover may be handover from a source cell to a target cell according to the handover configuration information, which may be disconnecting from the source cell, and accessing the target cell according to the handover configuration information.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

The foregoing handover instruction message may be physical layer signaling, MAC (Medium Access Control, Medium Access Control) layer control signaling, RRC signaling, or the like.

Preferably, the handover configuration message further carries the handover condition information, and the handover condition information is used to indicate the handover condition for performing cell handover by the terminal according to the handover configuration information. The transceiver 301 sends a handover request message to the source base station when determining that the terminal satisfies the handover condition; and receives the handover instruction message that is sent by the source base station when the source base station receives the handover request message sent by the terminal.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

Based on any implementation manner of the foregoing method embodiment, preferably, the terminal is applied to the high-speed movement scenario. The terminal further includes a judging module. Before the sending module sends the cell measurement result to the source base station, when a moving speed of the terminal reaches a specified speed threshold, or when a moving speed of the terminal reaches a specified speed threshold and duration in which the moving speed of the terminal reaches the specified speed threshold reaches specified duration, the processor 302 determines that the terminal is in a high-speed moving state. The transceiver 301 sends a high speed indication indicating that the terminal is in the high-speed moving state to the source base station.

When the foregoing source base station receives the high speed indication sent by the terminal and indicating that the terminal is in the high-speed moving state, the foregoing source base station triggers the terminal to send the cell measurement result, so that the source base station sends the handover configuration message and the handover condition information according to the cell measurement result.

A specific manner of sending the high speed indication by the terminal is already recorded in the foregoing embodiments of the present invention, and details are not described herein again.

An embodiment of the present invention provides a terminal. As shown in FIG. 4, the terminal includes a transceiver 401 and a processor 402.

The transceiver 401 receives measurement configuration information sent by a source base station, where the measurement configuration information is used by the terminal to perform cell measurement. The processor 402 performs cell measurement according to the cell measurement configuration information sent by the transceiver. When a measurement report condition is satisfied, the transceiver 402 sends a cell measurement result to the source base station, and receives a handover configuration message that is sent by the source base station according to the cell measurement result, where the handover configuration message carries handover configuration information, and the handover configuration information is used by the terminal to perform cell handover. When the terminal receives a handover instruction message that is sent by the source base station when the source base station determines that the terminal needs to perform cell handover, the processor 402 performs cell handover according to the handover configuration information, where the handover instruction message is used to instruct the terminal to perform cell handover according to the handover configuration information, and a length of the handover instruction message is less than a length of the handover configuration message.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

The foregoing handover instruction message may be physical layer signaling, MAC (Medium Access Control, Medium Access Control) layer control signaling, RRC signaling, or the like.

Preferably, the handover configuration message further carries handover condition information, and the handover condition information is used to indicate a handover condition for performing cell handover by the terminal according to the handover configuration information. The transceiver 401 sends a handover request message to the source base station when determining that the terminal satisfies the handover condition; and receives the handover instruction message that is sent by the source base station when the source base station receives the handover request message sent by the terminal.

Preferably, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

Based on any implementation manner of the foregoing method embodiment, preferably, the terminal is applied to the high-speed movement scenario. Before the transceiver 401 sends the cell measurement result to the source base station, when a moving speed of the terminal reaches a specified speed threshold, or when a moving speed of the terminal reaches a specified speed threshold and duration in which the moving speed of the terminal reaches the specified speed threshold reaches specified duration, the processor 402 determines that the terminal is in a high-speed moving state. The transceiver 401 sends a high speed indication indicating that the terminal is in the high-speed moving state to the source base station.

When the foregoing source base station receives the high speed indication sent by the terminal and indicating that the terminal is in the high-speed moving state, the foregoing source base station triggers the terminal to send the cell measurement result, so that the source base station sends the handover configuration message and the handover condition information according to the cell measurement result.

Preferably, for the first implementation manner of determining whether it is high-speed movement, two speed thresholds may be set. The two speed thresholds are named a first speed threshold and a second speed threshold. The first speed threshold is greater than the second speed threshold. A default moving state is low-speed movement. When determining that the moving speed reaches the first speed threshold, the processor 402 determines that it is the high-speed movement, and controls the transceiver 401 to send the high speed indication to the source base station. When the moving speed decreases and is not greater than the second speed threshold, the processor 402 determines that it is the low-speed movement, and may control the transceiver 402 to send a low speed indication to the source base station.

Certainly, alternatively, there may be only one speed threshold. A default moving state is low-speed movement. When determining that the moving speed reaches (is greater than) the speed threshold, the processor 401 determines that it is the high-speed movement, and controls the transceiver 402 to send the high speed indication to the source base station; and when the moving speed decreases and is not greater than the speed threshold, the processor 402 determines that it is low-speed movement, and may control transceiver 402 to send a low speed indication to the source base station.

In a second implementation manner, when a moving speed reaches a speed threshold, and duration in which the moving speed reaches the speed threshold reaches a time threshold, the processor 402 determines that it is high-speed movement, and controls the transceiver 402 to send a high speed indication to the source base station.

Preferably, for the second implementation manner of determining whether it is the high-speed movement, when the moving speed decreases and is not greater than the speed threshold, the processor 402 determines it is low-speed movement, and controls the transceiver 401 to send a low speed indication to the source base station. Alternatively, when a time threshold is exceeded after the transceiver 401 sends the high-speed indication to the source base station, if the moving speed decreases and is not greater than the speed threshold, the transceiver 401 sends a low speed indication to the source base station.

The speed threshold for determining the high-speed movement and the speed threshold for determining the low-speed movement may be a same threshold, or may be different thresholds.

The time threshold for determining the high-speed movement and the time threshold for determining the low speed indication may be a same threshold, or may be different thresholds.

If "reach" used in determining the high-speed movement represents "greater than", "not less than" is used in determining the low-speed movement. If "reach" used in determining the high-speed movement represents "not less than", "greater than" is used in determining the low-speed movement.

The foregoing high speed indication may be physical layer signaling, MAC layer signaling, RRC signaling, or the like.

Preferably, the speed threshold and the time threshold may be sent by the source base station, or may be pre-specified with a base station, which is not specifically limited in this embodiment of the present invention.

An embodiment of the present invention further provides a terminal. As shown in FIG. 5, the terminal includes a judging module 501 and a sending module 502. The sending module 502 of the terminal provided in FIG. 5 may further implement a function of the sending module 103 shown in FIG. 1, and the terminal may further include the receiving module 101 and the handover module 104 shown in FIG. 1 and implement functions of the receiving module 101 and the handover module 104.

The sending module 502 sends indication information to a mobility management entity MME when the judging module 501 determines that a bearer of a delay-sensitive service or a bearer of a short-delay service needs to be set up, where the indication information is used to indicate that the bearer of the delay-sensitive service or the bearer of the short-delay service needs to be set up, so that after receiving the indication information sent by the MME, a base station sets up the bearer of the delay-sensitive service or the bearer of the short-delay service, and the bearer of the delay-sensitive service or the bearer of the short-delay service is not actively released by the base station.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

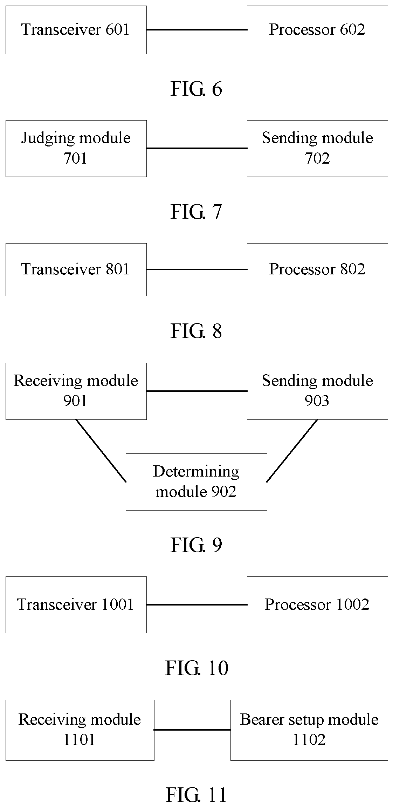

An embodiment of the present invention further provides a terminal. As shown in FIG. 6, the terminal includes a transceiver 601 and a processor 602. The transceiver 601 in the terminal provided in FIG. 6 may further implement a function of the transceiver 201 shown in FIG. 2. The processor 602 may further implement a function of the processor 602 shown in FIG. 2.

The transceiver 401 sends indication information to a mobility management entity MME when the processor 602 determines that a bearer of a delay-sensitive service or a bearer of a short-delay service needs to be set up, where the indication information is used to indicate that the bearer of the delay-sensitive service or the bearer of the short-delay service needs to be set up, so that after receiving the indication information sent by the MME, a base station sets up the bearer of the delay-sensitive service, and the bearer of the delay-sensitive service or the bearer of the short-delay service is not actively released by the base station.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

An embodiment of the present invention provides a base station. As shown in FIG. 7, the base station includes a sending module 701 and a receiving module 702.

The sending module 701 is configured to send measurement configuration information to a terminal.

The foregoing measurement configuration information may be carried in a measurement configuration message for sending.

The receiving module 702 is configured to: receive a measurement report message that is sent by the terminal when the terminal satisfies a measurement report condition, and obtain handover configuration information of a target cell, where the measurement report message carries a cell measurement result.

The sending module 701 is further configured to send the handover configuration information and handover condition information to the terminal, where the handover configuration information is used by the terminal to perform cell handover, and the handover condition information is used to indicate a handover condition for performing cell handover by the terminal according to the handover configuration information, so that the terminal satisfies the handover condition indicated by the handover indication information, and performs cell handover according to the received handover configuration information.

In a high-speed movement scenario, affected by a Doppler frequency shift, a channel state changes relatively fast. By means of this solution of the present invention, a base station sends a handover condition to a terminal, so that when receiving the handover configuration information, the terminal does not perform handover immediately, and performs handover only when the handover condition is satisfied. Therefore, when performing handover, the terminal has already received the handover configuration information in advance, and does not need to interact signaling with a source base station, thereby avoiding an impact caused to a handover process by a rapid change of the channel state, and reducing a handover failure rate increase.

The base station may be a base transceiver station (BTS, Base Transceiver Station) in the GSM or CDMA, may be a NodeB (NodeB) in WCDMA, or may be an evolved NodeB (eNB or e-NodeB) or a relay (Relay) in the LTE, which is not specifically limited in the present invention.

Preferably, the handover configuration information and the handover condition information may be carried in one message for sending, or may be separately sent. For example, both the handover configuration information and the handover condition information are carried in a handover configuration message for sending. The handover configuration message may be an RRC (Radio Resource Control, Radio Resource Control) connection reconfiguration message carrying mobile control information.

Preferably, if the receiving module 702 of the base station receives measurement report messages sent when it is determined that at least two terminals satisfy the measurement condition, the sending module 701 may send handover configuration messages to different terminals at different times. For example, the sending module 701 sequentially sends the handover configuration messages to the terminals at different times according to a preset priority. Other manners in which sending may be performed for the terminals at different times are all applicable to the present invention. By means of the foregoing method, collective handover of multiple terminals may be avoided, thereby avoiding a signaling storm and reducing an impact on handover performance.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

Preferably, the receiving module 702 is further configured to:
before receiving the measurement report message that is sent by the terminal when the terminal satisfies the measurement report condition, receive a high speed indication that is sent by the terminal and that is of the high-speed moving state, where the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

A specific manner of sending the high speed indication by the terminal is already recorded in the foregoing embodiments of the present invention, and details are not described herein again.

An embodiment of the present invention further provides a base station. As shown in FIG. 8, the base station includes a transceiver 801 and a processor 802.

The transceiver 801 is configured to: send a measurement control message to a terminal, where the measurement control message carries measurement configuration information; and receive a measurement report message that is sent by the terminal when the terminal satisfies a measurement condition, and obtain handover configuration information of a target cell, where the measurement report message carries a cell measurement result. The processor 802 is configured to control the transceiver 601 to send the handover configuration information and handover condition information to the terminal according to the obtained handover configuration information of the target cell, where the handover condition information is used to indicate a handover condition for performing cell handover by the terminal according to the handover configuration information, so that the terminal satisfies the handover condition indicated by the handover indication information, and performs cell handover according to the received handover configuration information.

In a high-speed movement scenario, affected by a Doppler frequency shift, a channel state changes relatively fast. By means of this solution of the present invention, a source base station sends handover configuration information and handover condition information to a terminal, so that when receiving the handover configuration information, the terminal does not perform handover immediately, and performs handover only when a handover condition indicated by the handover condition information is satisfied. Therefore, when performing handover, the terminal has already received the handover configuration information in advance, and does not need to interact signaling with the source base station, thereby avoiding an impact caused to a handover process by a rapid change of the channel state, and reducing a handover failure rate increase.

The base station may be a base transceiver station (BTS, Base Transceiver Station) in the GSM or CDMA, may be a NodeB (NodeB) in WCDMA, or may be an evolved NodeB (eNB or e-NodeB) or a relay (Relay) in the LTE, which is not specifically limited in the present invention.

Preferably, the handover configuration information and the handover condition information may be carried in one message for sending, or may be separately sent. For example, both the handover configuration information and the handover condition information are carried in a handover configuration message for sending. The handover configuration message may be an RRC (Radio Resource Control, Radio Resource Control) connection reconfiguration message carrying mobile control information.

Preferably, if the transceiver 801 receives measurement report messages sent when it is determined that at least two terminals satisfy the measurement condition, the processor 802 may control the transceiver 801 to send handover configuration messages to different terminals at different times. For example, the transceiver 801 sequentially sends the handover configuration messages to the terminals at different times according to a preset priority. Other manners in which sending may be performed for the terminals at different times are all applicable to the present invention. By means of the foregoing method, collective handover of multiple terminals may be avoided, thereby avoiding a signaling storm and reducing an impact on handover performance.

A specific manner of sending a high speed indication by the terminal is already recorded in the foregoing embodiments of the present invention, and details are not described herein again.

The present invention further provides a base station. As shown in FIG. 9, the base station includes a sending module 901, a receiving module 902, and a determining module 903.

The sending module 901 is configured to send measurement configuration information to a terminal, where the measurement configuration information is used by the terminal to perform cell measurement.

The receiving module 902 is configured to: receive a measurement report message that is sent by the terminal when the terminal satisfies a measurement report condition, and obtain handover configuration information of a target cell, where the measurement report message carries a cell measurement result.

The sending module 901 is further configured to send a handover configuration message to the terminal, where the handover configuration message carries the handover configuration information, and the handover configuration information is used by the terminal to perform cell handover.

The determining module 903 is further configured to determine that the terminal needs to perform cell handover.

The sending module 901 is further configured to send a handover instruction message to the terminal when it is determined that the terminal needs to perform cell handover, so that the terminal performs cell handover according to the handover configuration information, where the handover instruction message is used to instruct the terminal to perform cell handover according to the handover configuration information, and a length of the handover instruction message is less than a length of the handover configuration message.

In a high-speed movement scenario, affected by a Doppler frequency shift, a channel state changes relatively fast. By means of this solution of the present invention, when receiving handover configuration information, a terminal does not perform handover immediately, and performs handover only when receiving a handover instruction message. Therefore, when performing handover, the terminal has already received the handover configuration information in advance, and needs to interact only relatively small signaling with a source base station, thereby reducing an impact caused to a handover process by a channel change, and reducing a handover failure rate increase.

Preferably, the handover configuration message further carries handover condition information, and the handover condition information is used to indicate a handover condition for performing cell handover by the terminal according to the handover configuration information.

The receiving module 902 is further configured to receive a handover request message sent by the terminal.

The determining module 903 is further configured to: when the receiving module receives the handover request message sent by the terminal, determine that the terminal needs to perform cell handover.

The sending module 901 is configured to send the handover instruction message to the terminal, where the handover request message is sent by the terminal to the source base station when determining that the terminal satisfies the handover condition.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

The base station may determine the foregoing handover condition by establishing a mathematical model according to a moving speed of the terminal, a condition of a channel between the base station and the terminal, a signal transmission speed, and the like.

The present invention further provides a base station. As shown in FIG. 10, the base station includes a transceiver 1001 and a processor 1002.

The transceiver 1001 is configured to: send a measurement control message to a terminal, where the measurement control message carries measurement configuration information, and the measurement configuration information is used by the terminal to perform cell measurement; receive a measurement report message that is sent by the terminal when the terminal satisfies a measurement report condition, and obtain handover configuration information of a target cell, where the measurement report message carries a cell measurement result; and send a handover configuration message to the terminal, where the handover configuration message carries the handover configuration information, and the handover configuration information is used by the terminal to perform cell handover. The processor 1002 is configured to determine that the terminal needs to perform cell handover. The transceiver 1001 is configured to send a handover instruction message to the terminal, so that the terminal performs cell handover according to the handover configuration information, where the handover instruction message is used to instruct the terminal to perform cell handover according to the handover configuration information, and a length of the handover instruction message is less than a length of the handover configuration message.

Preferably, the handover configuration message further carries handover condition information, and the handover condition information is used to indicate a handover condition for performing cell handover by the terminal according to the handover configuration information.

The transceiver 1001 receives a handover request message sent by the terminal; when receiving the handover request message sent by the terminal, determines that the terminal needs to perform cell handover; and sends the handover instruction message to the terminal, where the handover request message is sent by the terminal to the source base station when determining that the terminal satisfies the handover condition.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

The base station may determine the foregoing handover condition by establishing a mathematical model according to a moving speed of the terminal, a condition of a channel between the base station and the terminal, a signal transmission speed, and the like.

Preferably, if the transceiver 1001 receives measurement report messages sent when it is determined that at least two terminals satisfy a measurement condition, the processor 1002 may control the transceiver 1001 to send handover configuration messages to different terminals at different times. For example, the transceiver 1101 sequentially sends the handover configuration messages to the terminals at different times according to a preset priority. Other manners in which sending may be performed for the terminals at different times are all applicable to the present invention. By means of the foregoing method, collective handover of multiple terminals may be avoided, thereby avoiding a signaling storm and reducing an impact on handover performance.

A specific manner of sending a high speed indication by the terminal is already recorded in the foregoing embodiments of the present invention, and details are not described herein again.

The present invention further provides a base station. As shown in FIG. 11, the base station includes a receiving module 1101 and a bearer setup module 1102. The receiving module 1101 of the terminal provided in FIG. 9 may further implement a function of the receiving module 702 shown in FIG. 7, and the terminal provided in FIG. 9 may further include the sending module 701 in the embodiment shown in FIG. 7 and implement a function of the sending module 701.

The receiving module 901 is configured to receive indication information indicating that a terminal needs to set up a bearer of the delay-sensitive service or a bearer of a short-delay service.

The bearer setup module 902 is configured to set up the bearer of the delay-sensitive service or the bearer of the short-delay service with the terminal according to the received indication information, and the bearer of the delay-sensitive service or the bearer of the short-delay service is not actively released.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing apparatus, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

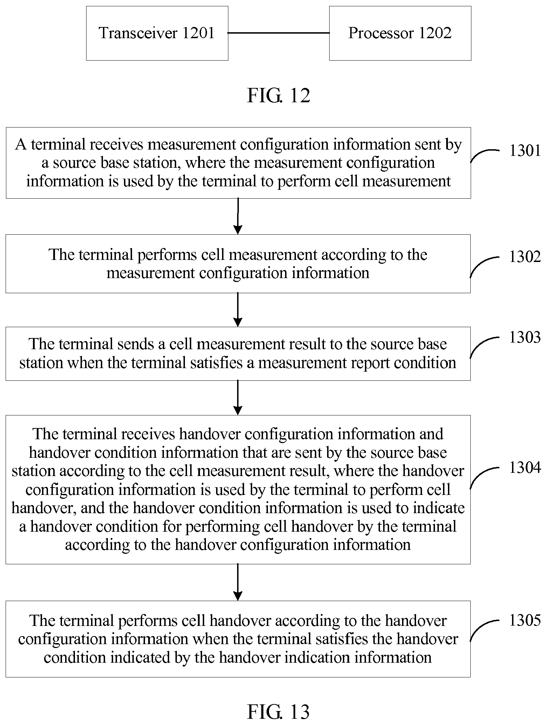

The present invention further provides a base station. As shown in FIG. 12, the base station includes a transceiver 1201 and a processor 1202. The transceiver 1201 of the terminal provided in FIG. 12 may further implement a function of the transceiver 801 shown in FIG. 8, and the processor 1202 of the terminal provided in FIG. 12 may further implement a function of the processor 802 shown in FIG. 8.

The transceiver 1201 receives indication information indicating that a terminal needs to set up a bearer of a delay-sensitive service or a bearer of a short-delay service. The processor 1202 sets up the bearer of the delay-sensitive service or the bearer of the short-delay service with the terminal according to the received indication information, and the bearer of the delay-sensitive service or the bearer of the short-delay service is not actively released.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

Based on an inventive concept (a part same as the foregoing content is not described in this embodiment of the present invention herein again) same as that of the embodiment of the terminal shown in FIG. 1, an embodiment of the present invention provides a handover method. As shown in FIG. 13, the method includes:
Step 1301: A terminal receives measurement configuration information sent by a source base station, where the measurement configuration information is used by the terminal to perform cell measurement.
   The foregoing measurement configuration information may be carried in a measurement control message for sending.
Step 1302: The terminal performs cell measurement according to the measurement configuration information.
   Cell measurement includes measurement (which is usually measurement on RSRP and RSRQ) on a source cell serving the terminal, and a neighboring cell of the source cell.
Step 1303: The terminal sends a cell measurement result to the source base station when the terminal satisfies a measurement report condition.
   If measurement report events include events A1 to A5, and events B1 and B2, satisfying the measurement report condition is satisfying the events A1 to A5 and the events B1 and B2. Then, the terminal reports the cell measurement result to the source base station, and the source base station determines, according to the cell measurement result, whether to perform handover.
   For example, when signal quality of the neighboring cell is greater than signal quality of a target cell, the source base station determines that the terminal needs to perform handover.
Step 1304: The terminal receives handover configuration information and handover condition information that are sent by the source base station according to the cell measurement result, where the handover configuration information is used by the terminal to perform cell handover, and the handover condition information is used to indicate a handover condition for performing cell handover by the terminal according to the handover configuration information.
Step 1305: The terminal performs cell handover according to the handover configuration information when the terminal satisfies the handover condition indicated by the handover indication information.

Performing handover according to the handover configuration information is specifically handing over from the source cell to the target cell according to the foregoing handover configuration information, which may be disconnecting from the source cell, and accessing the target cell according to the handover configuration information.

The foregoing terminal may be a mobile terminal such as a mobile telephone (or referred to as a "cellular" telephone), or may be a portable computer, for example, may be a portable, pocket, or handheld computer, which is not specifically limited in this embodiment of the present invention.

In a high-speed movement scenario, affected by a Doppler frequency shift, a channel state changes relatively fast. By means of this solution of the present invention, when receiving handover configuration information, a terminal does not perform handover immediately, and performs handover only when determining that the terminal satisfies a handover condition. Therefore, when performing handover, the terminal has already received the handover configuration information in advance, and does not need to interact signaling with the source base station, thereby avoiding an impact caused to a handover process by a rapid change of the channel state, and reducing a handover failure rate increase.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

Preferably, before the sending a cell measurement result to the source base station, the method further includes:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

A specific determining manner for determining the high-speed moving state is not described herein again.

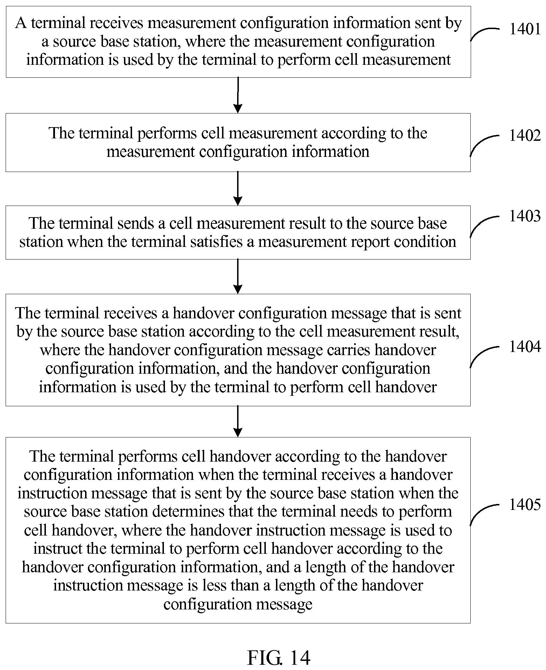

Based on an inventive concept same as that of the embodiment of the terminal of FIG. 3, an embodiment of the present invention further provides a handover method. As shown in FIG. 14, the method includes:
Step 1401: A terminal receives measurement configuration information sent by a source base station, where the measurement configuration information is used by the terminal to perform cell measurement.
Step 1402: The terminal performs cell measurement according to the measurement configuration information.
Step 1403: The terminal sends a cell measurement result to the source base station when the terminal satisfies a measurement report condition.
Step 1404: The terminal receives a handover configuration message that is sent by the source base station according to the cell measurement result, where the handover configuration message carries handover configuration information, and the handover configuration information is used by the terminal to perform cell handover.
Step 1405: The terminal performs cell handover according to the handover configuration information when the terminal receives a handover instruction message that is sent by the source base station when the source base station determines that the terminal needs to perform cell handover, where the handover instruction message is used to instruct the terminal to perform cell handover according to the handover configuration information, and a length of the handover instruction message is less than a length of the handover configuration message.

The foregoing handover instruction message may be physical layer signaling, MAC (Medium Access Control, Medium Access Control) layer control signaling, RRC signaling, or the like.

Preferably, the handover configuration message further carries handover condition information, and the handover condition information is used to indicate a handover condition for performing cell handover by the terminal according to the handover configuration information. The method further includes:
sending a handover request message to the source base station when determining that the terminal satisfies the handover condition; and
that the terminal receives a handover instruction message that is sent by the source base station when the source base station determines that the terminal needs to perform cell handover specifically includes:
   receiving, by the terminal, the handover instruction message that is sent by the source base station when the source base station receives the handover request message sent by the terminal.

Preferably, the handover condition includes at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

Preferably, before the sending a cell measurement result to the source base station, the method further includes:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

A specific determining manner for determining the high-speed moving state is not described herein again.

An embodiment of the present invention further provides a bearer setup method, and the method includes:
sending indication information to a mobility management entity (MME) when it is determined that a bear of a delay-sensitive service or a bearer of a short-delay service needs to be set up, where the indication information is used to indicate that the bearer of the delay-sensitive service or the bearer of the short-delay service needs to be set up, so that a base station sets up the bearer of the delay-sensitive service or the bearer of the short-delay service after the base station receives the indication information sent by the MME, and the base station does not actively release the bearer of the delay-sensitive service or the bearer of the short-delay service.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

The bearer setup method provided in the foregoing embodiment may be individually implemented, or may be implemented together with the handover method provided in the embodiment shown in FIG. 13 or 14.

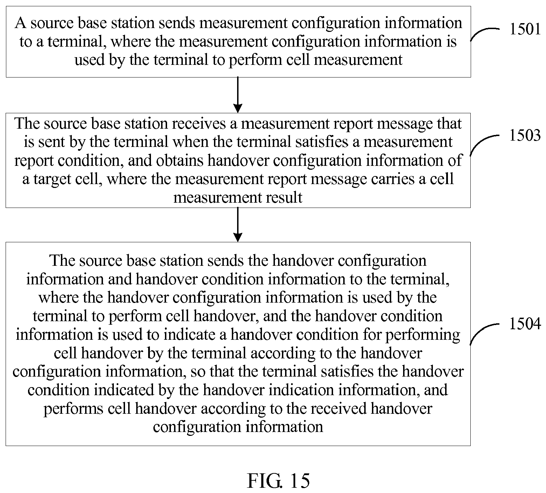

Based on an inventive concept same as that of the foregoing embodiment of the handover method, an embodiment of the present invention further provides another handover method (content same as the foregoing embodiment of the handover method is not described herein again). As shown in FIG. 15, the handover method includes:
Step 1501: A source base station sends measurement configuration information to a terminal, where the measurement configuration information is used by the terminal to perform cell measurement.
Step 1502: The source base station receives a measurement report message that is sent by the terminal when the terminal satisfies a measurement report condition, and obtains handover configuration information of a target cell, where the measurement report message carries a cell measurement result.
Step 1503: The source base station sends the handover configuration information and handover condition information to the terminal, where the handover configuration information is used by the terminal to perform cell handover, and the handover condition information is used to indicate a handover condition for performing cell handover by the terminal according to the handover configuration information, so that the terminal satisfies the handover condition indicated by the handover indication information, and performs cell handover according to the received handover configuration information.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

Preferably, before the receiving, by the source base station, a measurement report message that is sent by the terminal when the terminal satisfies a measurement report condition, the method further includes:
receiving a high speed indication that is sent by the terminal and that is of the high-speed moving state, where the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

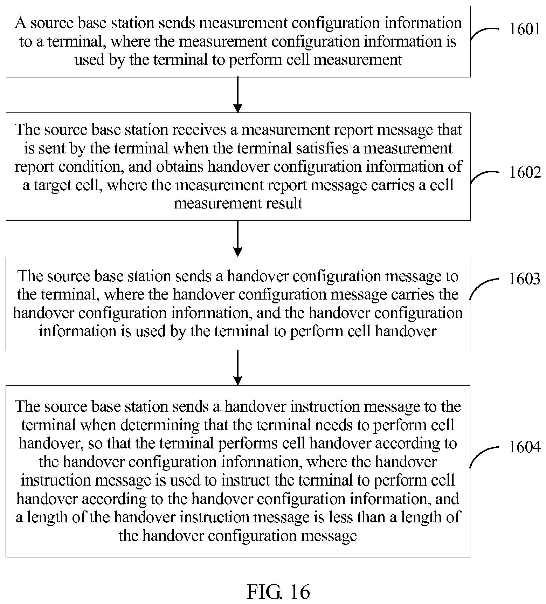

Based on an inventive concept same as that of the embodiment of the base station of FIG. 9, an embodiment of the present invention further provides a handover method. As shown in FIG. 16, the method includes:
Step 1601: A source base station sends a measurement control message to a terminal, where the measurement control message carries measurement configuration information, and the measurement configuration information is used by the terminal to perform cell measurement.
Step 1602: The source base station receives a measurement report message that is sent by the terminal when the terminal satisfies a measurement report condition, and obtains handover configuration information of a target cell, where the measurement report message carries a cell measurement result.
Step 1603: The source base station sends a handover configuration message to the terminal, where the handover configuration message carries the handover configuration information, and the handover configuration information is used by the terminal to perform cell handover.
Step 1604: The source base station sends a handover instruction message to the terminal when the base station determines that the terminal needs to perform cell handover, so that the terminal performs cell handover according to the handover configuration information, where the handover instruction message is used to instruct the terminal to perform cell handover according to the handover configuration information, and a length of the handover instruction message is less than a length of the handover configuration message.

Preferably, the handover configuration message further carries handover condition information, and the handover condition information is used to indicate a handover condition for performing cell handover by the terminal according to the handover configuration information.

The sending, by the source base station, a handover instruction message to the terminal when the base station determines that the terminal needs to perform cell handover includes:
receiving, by the source base station, a handover request message sent by the terminal, determining that the terminal needs to perform cell handover, and sending the handover instruction message to the terminal, where the handover request message is sent by the terminal to the source base station when determining that the terminal satisfies the handover condition.

Preferably, the handover condition includes at least one of the following conditions:
a preset handover execution time point;
a time point corresponding to a current time point after a preset handover execution time offset value is added to the current time point;
a first preset threshold that needs to be reached by an RSRP value of a signal received by the terminal;
a second preset threshold that needs to be reached by a difference between an RSRP value of a signal most recently received by the terminal and an RSRP value of a previously received signal;
a third preset threshold that needs to be reached by an RSRQ value of a signal received by the terminal; or
a fourth preset threshold that needs to be reached by a difference between an RSRQ value of a signal most recently received by the terminal and an RSRQ value of a previously received signal.

Based on any method embodiment of FIG. 16, before the sending a cell measurement result to the source base station, the method further includes:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

An embodiment of the present invention further provides another bearer method, and the method includes:
receiving indication information indicating that a terminal needs to set up a bearer of a delay-sensitive service or a short-delay service, and setting up the bearer of the delay-sensitive service or the bearer of the short-delay service, where the bearer of the delay-sensitive service or the bearer of the short-delay service is not actively released.

In the prior art, a delay-sensitive service or a short-delay service requires a packet transmission delay that is short enough. According to the prior art, when there is no data interaction in a particular time, a base station actively releases a connection, and changes a terminal to an idle state. When the terminal is in the idle state, and when data needs to be sent, an RRC connection needs to be established first, which requires some time. For a high-speed movement scenario, a requirement of a short enough delay cannot be satisfied. By means of the foregoing method, the base station sets up a bearer of a delay-sensitive service or a bearer of a short-delay service according to a requirement of the terminal, and the bearer is not actively released by the base station, so that a connected state is kept for the bearer of the delay-sensitive service or the bearer of the short-delay service. Therefore, when the terminal needs to send data, a connection no longer needs to be established, thereby saving time and improving a handover success rate.

The bearer setup method provided in the foregoing embodiment may be individually implemented, or may be implemented together with the handover method provided in the embodiment shown in FIG. 10.

The handover method provided in the present invention is described in detail by using the following specific embodiments. The following embodiments may be separately implemented for a base station and a terminal, to separately resolve technical problems on a base station side and a terminal side in the prior art.

### Embodiment 1

Step 1701: A source base station sends a measurement control message to a terminal, where the measurement control message carries measurement configuration information.

Step 1702: After the terminal receives the measurement control message, and when it is determined that a measurement report condition is satisfied, the terminal sends a measurement report message to the source base station, where the measurement report message carries a cell measurement result.

For example, satisfying the measurement report condition may be sending, by the terminal, the measurement report message to the source base station when the terminal determines that a signal quality parameter value of a source cell decreases, but is the same as a signal quality parameter value of a target cell.

Step 1703: The source base station receives the measurement report message of the terminal, and if the source base station determines that the terminal needs to perform handover configuration, the source base station interacts signaling with a target cell, and obtains handover configuration information of the target cell.

Step 1704: The source base station sends, to the terminal, an RRC connection reconfiguration message carrying mobile control information, where the message carries the handover configuration information and handover condition information, and the handover condition information indicates a preset handover time point.

Step 1705: After the terminal receives the handover configuration message, and when the preset handover time point is reached, the terminal disconnects from a source cell and accesses the target cell.

Preferably, the preset handover time point in the foregoing step 1704 may be a time point corresponding to a current time point after a preset handover execution time offset value is added to the current time point. In step 1705, after receiving the handover configuration message, and when the time point corresponding to the current time point after the preset handover execution time offset value is added to the current time point is reached, the terminal disconnects from the source cell and accesses the target cell.

### Embodiment 2

Step 1801: A source base station sends a measurement control message to a terminal, where the measurement control message carries measurement configuration information.

Step 1802: After the terminal receives the measurement control message, and when a measurement report condition is satisfied, the terminal sends a measurement report message to the source base station, where the measurement report message carries a cell measurement result.

Step 1803: The source base station receives the measurement report message of the terminal, and if the source base station determines that the terminal needs to perform handover configuration, the source base station interacts signaling with a target cell, and obtains handover configuration information of the target cell.

Step 1804: The source base station sends, to the terminal, an RRC connection reconfiguration message carrying mobile control information, where the message carries the handover configuration information and handover condition information, and the handover condition information indicates a first preset threshold that needs to be reached by reference signal received power of a signal received by the terminal.

Step 1805: After the terminal receives the handover configuration message, and when the reference signal received power of the signal received by the terminal reaches the first preset threshold, the terminal disconnects from a source cell and accesses the target cell.

Preferably, in the foregoing step 1804, a third preset threshold that needs to be reached by a reference signal received quality (RSRQ) value of the signal received by the terminal may be a fourth preset threshold that needs to be reached by a difference between an RSRQ value of a signal most recently received by the terminal and an RSRQ value of a previously received signal, or the first preset threshold that needs to be reached by a reference signal received power (RSRP) value of the signal received by the terminal, or a second preset threshold that needs to be reached by a difference between an RSRP value of a signal most recently received by the terminal and an RSRP value of a previously received signal.

### Embodiment 3

A difference between Embodiment 3 of the present invention and Embodiment 2 is that in step 1195, when it is determined that a reference signal received power threshold is reached (or another parameter value provided in Embodiment 2 may be reached), a terminal sends handover request indication information to a source base station. After receiving the handover request indication information, the source base station sends handover instruction information to the terminal. After receiving the handover instruction message, the terminal disconnects from a source cell and accesses a target cell.

### Embodiment 4

Step 1901: A source base station sends a measurement control message to a terminal, where the measurement control message carries measurement configuration information.

Step 1902: After the terminal receives the measurement control message, and when it is determined that a measurement report condition is satisfied, the terminal sends a measurement report message to the source base station, where the measurement report message carries a cell measurement result.

Step 1903: The source base station receives the measurement report message of the terminal, and if the source base station determines that the terminal needs to perform handover configuration, the source base station interacts signaling with a target cell, and obtains handover configuration information of the target cell.

Step 1904: The source base station sends, to the terminal, an RRC connection reconfiguration message carrying mobile control information, where the message carries the handover configuration information.

Step 1905: After receiving the handover configuration message, the terminal pre-stores the handover configuration information.

Step 1906: When determining, according to the cell measurement result, that the terminal performs handover, the source base station sends a handover instruction message (which may be physical layer signaling, MAC layer control signaling, or RRC signaling) to the terminal, where a length of the handover instruction message is less than a length of the handover configuration message.

Step 1907: After receiving the handover instruction message, the terminal disconnects from a source cell, and accesses the target cell according to the pre-stored handover configuration information.

### Embodiment 5

Step 2001: A source base station sends a measurement control message to a terminal, where the measurement control message carries measurement configuration information, and the measurement configuration information carries configuration of a handover configuration measurement event.

Step 2002: After the terminal receives the measurement control message, and when the handover configuration measurement event is satisfied, the terminal sends a measurement report message to the source base station, where the measurement report message carries a measurement result.

When it is determined that the handover configuration measurement event is satisfied, it is determined that a measurement report condition is satisfied.

Step 2003: The source base station receives the measurement report message of the terminal, interacts signaling with a target cell, and obtains handover configuration information of the target cell.

Step 2004: The source base station sends, to the terminal, an RRC connection reconfiguration message carrying mobile control information, where the message carries the handover configuration information.

Step 2005: After receiving the handover configuration message, the terminal pre-stores the handover configuration information.

Step 2006: When determining, according to the measurement result, that the terminal performs handover, the source base station sends handover instruction information (which may be physical layer signaling, MAC layer control signaling, or RRC signaling) to the terminal, where a length of the handover instruction message is less than a length of the handover configuration message.

Step 2007: After receiving the handover instruction message, the terminal disconnects from a source cell, and accesses the target cell according to the pre-stored handover configuration information.

### Embodiment 6

Based on Embodiment 1 to Embodiment 5, the handover method is applied to a high-speed movement scenario. It is required to determine whether it is high-speed movement, and a determining manner may include:
sending, by a source base station, RRC signaling to a terminal, where the signaling carries a speed threshold; and
when determining that a moving speed reaches a preset speed threshold, determining, by the terminal, that it is high-speed movement, and sending a high speed indication (which may be physical layer signaling, MAC layer control signaling, or RRC signaling) to the source base station.

### Embodiment 7

Based on Embodiment 6, when the terminal determines that the moving speed decreases less than the speed threshold, the terminal sends a low speed indication (which may be physical layer signaling, MAC layer control signaling, or RRC signaling) to the source base station.

Preferably, a base station may configure two speed thresholds for the terminal. One is used to determine a high speed, and the other is used to determine a low speed.

Preferably, a time 1 may further be included (which may be configured by the base station, or may be fixedly determined by the terminal). The high speed indication is sent to the source base station only when it is determined a time in which the moving speed reaches the speed threshold exceeds the time 1.

Preferably, a time 2 may further be included (which may be configured by the base station, or may be fixedly determined by the terminal). After the high speed indication is sent to the source base station, a low speed indication is allowed to be sent only when the time 2 is exceeded. The time 1 herein may be equal to the time 2 or may not be equal to the time 2, which is not specifically limited in this embodiment.

### Embodiment 8

When determining that a bearer of a delay-sensitive service or a bearer of a short-delay service needs to be set up, a terminal sends indication information of setting up the bearer of the delay-sensitive service or the bearer of the short-delay service to an MME.

The indication information may be carried in NAS signaling for sending.

After receiving the indication information of the bearer of the delay-sensitive service or the bearer of the short-delay service, the MME sends the indication information of the bearer of the delay-sensitive service or the bearer of the short-delay service to a base station.

When sending the indication information of the bearer of the delay-sensitive service to the base station, the MME may send the indication information of the delay-sensitive service by adding the indication information of the delay-sensitive service to initial context request signaling.

The base station receives the indication information of the bearer of the delay-sensitive service, and sets up the bearer of the delay-sensitive service with the terminal, and the base station does not actively release the bearer of the delay-sensitive service.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. A terminal, comprising: a receiving module, a measurement module, a sending module, and a handover module, wherein
the receiving module is configured to receive measurement configuration information sent by a source base station, wherein the measurement configuration information is used by the terminal to perform cell measurement;
the measurement module is configured to perform cell measurement according to the measurement configuration information;
the sending module is configured to send a cell measurement result to the source base station when a measurement report condition is satisfied;
the receiving module is further configured to receive handover configuration information and handover condition information that are sent by the source base station according to the cell measurement result, wherein the handover configuration information is used by the terminal to perform cell handover, and the handover condition information is used to indicate a handover condition for performing cell handover by the terminal according to the handover configuration information; and
the handover module is configured to perform cell handover according to the handover configuration information when the terminal satisfies the handover condition indicated by the handover indication information.

2. The terminal according to claim 1, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

3. The terminal according to claim 1 or 2, wherein the terminal further comprises a judging module;
before the sending module sends a measurement report message to the source base station, the judging module is configured to: when a moving speed of the terminal reaches a specified speed threshold, or when a moving speed of the terminal reaches a specified speed threshold and duration in which the moving speed of the terminal reaches the specified speed threshold reaches specified duration, determine that the terminal is in a high-speed moving state; and
the sending module is further configured to send a high speed indication indicating that the terminal is in the high-speed moving state to the source base station.

4. A terminal, comprising:
a receiving module, a measurement module, a sending module, and a handover module, wherein
the receiving module is configured to receive measurement configuration information sent by a source base station, wherein the measurement configuration information is used by the terminal to perform cell measurement;
the measurement module is configured to perform cell measurement according to the measurement configuration information;
the sending module is configured to send a cell measurement result to the source base station when a measurement report condition is satisfied;
the receiving module is further configured to receive a handover configuration message that is sent by the source base station according to the cell measurement result, wherein the handover configuration message carries handover configuration information, and the handover configuration information is used by the terminal to perform cell handover; and
the handover module is configured to perform, by the terminal, cell handover according to the handover configuration information when the terminal receives a handover instruction message that is sent by the source base station when the source base station determines that the terminal needs to perform cell handover, wherein the handover instruction message is used to instruct the terminal to perform cell handover according to the handover configuration information, and a length of the handover instruction message is less than a length of the handover configuration message.

5. The terminal according to claim 4, wherein the handover configuration message further carries handover condition information, the handover condition information is used to indicate a handover condition for performing cell handover by the terminal according to the handover configuration information, and the sending module is further configured to send a handover request message to the source base station when determining that the terminal satisfies the handover condition; and
the receiving module is further configured to receive the handover instruction message that is sent by the source base station when the source base station receives the handover request message sent by the terminal.

6. The terminal according to claim 5, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

7. The terminal according to any one of claims 4 to 6, wherein the terminal further comprises a judging module;
before the sending module sends the cell measurement result to the source base station, the judging module is configured to: when a moving speed of the terminal reaches a specified speed threshold, or when a moving speed of the terminal reaches a specified speed threshold and duration in which the moving speed of the terminal reaches the specified speed threshold reaches specified duration, determine that the terminal is in a high-speed moving state; and
the sending module is further configured to send a high speed indication indicating that the terminal is in the high-speed moving state to the source base station.

8. Abase station, comprising a sending module and a receiving module, wherein the sending module is configured to send measurement configuration information to a terminal, wherein the measurement configuration information is used by the terminal to perform cell measurement;
the receiving module is configured to: receive a measurement report message that is sent by the terminal when the terminal satisfies a measurement report condition, and obtain handover configuration information of a target cell, wherein the measurement report message carries a cell measurement result; and
the sending module is further configured to send the handover configuration information and handover condition information to the terminal, wherein the handover configuration information is used by the terminal to perform cell handover, and the handover condition information is used to indicate a handover condition for performing cell handover by the terminal according to the handover configuration information, so that the terminal satisfies the handover condition indicated by the handover indication information, and performs cell handover according to the received handover configuration information.

9. The base station according to claim 8, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

10. The base station according to claim 8 or 9, wherein the receiving module is further configured to:
before receiving the measurement report message that is sent by the terminal when the terminal satisfies the measurement report condition, receive a high speed indication that is sent by the terminal and that is of the high-speed moving state, wherein the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

11. A base station, comprising a sending module and a receiving module, wherein
the sending module is configured to send a measurement control message to a terminal, wherein the measurement control message carries measurement configuration information, and the measurement configuration information is used by the terminal to perform cell measurement;
the receiving module is configured to: receive a measurement report message that is sent by the terminal when the terminal satisfies a measurement report condition, and obtain handover configuration information of a target cell, wherein the measurement report message carries a cell measurement result;
the sending module is further configured to send a handover configuration message to the terminal, wherein the handover configuration message carries the handover configuration information, and the handover configuration information is used by the terminal to perform cell handover;
the determining module is further configured to determine that the terminal needs to perform cell handover; and
the sending module is further configured to send a handover instruction message to the terminal when it is determined that the terminal needs to perform cell handover, so that the terminal performs cell handover according to the handover configuration information, wherein the handover instruction message is used to instruct the terminal to perform cell handover according to the handover configuration information, and a length of the handover instruction message is less than a length of the handover configuration message.

12. The base station according to claim 11, wherein the handover configuration message further carries handover condition information, and the handover condition information is used to indicate a handover condition for performing cell handover by the terminal according to the handover configuration information;
the receiving module is further configured to receive a handover request message sent by the terminal;
the determining module is further configured to: when the receiving module receives the handover request message sent by the terminal, determine that the terminal needs to perform cell handover; and
the sending module is configured to send the handover instruction message to the terminal, wherein the handover request message is sent by the terminal to the source base station when determining that the terminal satisfies the handover condition.

13. The base station according to claim 12, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

14. The base station according to any one of claims 11 to 13, wherein the receiving module is further configured to:
before receiving the cell measurement result sent by the terminal, receive a high speed indication that is sent by the terminal and that is of a high-speed moving state, wherein the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

15. A terminal, comprising a judging module and a sending module, wherein
indication information is sent to a mobility management entity MME when it is determined that a bearer of a delay-sensitive service needs to be set up, wherein the indication information is used to indicate that the bearer of the delay-sensitive service needs to be set up, so that after receiving the indication information sent by the MME, a base station sets up the bearer of the delay-sensitive service, and the bearer of the delay-sensitive service is not actively released by the base station.

16. A base station, comprising a receiving module and a bearer setup module, wherein
the receiving module is configured to receive indication information indicating that a terminal needs to set up a bearer of a delay-sensitive service; and
the bearer setup module is configured to set up the bearer of the delay-sensitive service with the terminal according to the received indication information, and the bearer of the delay-sensitive service is not actively released.

17. A handover method, comprising:
receiving, by a terminal, measurement configuration information sent by a source base station, wherein the measurement configuration information is used by the terminal to perform cell measurement;
performing, by the terminal, cell measurement according to the measurement configuration information;
sending, by the terminal, a cell measurement result to the source base station when the terminal satisfies a measurement report condition;
receiving, by the terminal, handover configuration information and handover condition information that are sent by the source base station according to the cell measurement result, wherein the handover configuration information is used by the terminal to perform cell handover, and the handover condition information is used to indicate a handover condition for performing cell handover by the terminal according to the handover configuration information; and
performing, by the terminal, cell handover according to the handover configuration information when the terminal satisfies the handover condition indicated by the handover indication information.

18. The handover method according to claim 17, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

19. The method according to claim 17 or 18, before the sending a cell measurement result to the source base station, further comprising:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

20. A handover method, comprising:
receiving, by a terminal, measurement configuration information sent by a source base station, wherein the measurement configuration information is used by the terminal to perform cell measurement;
performing, by the terminal, cell measurement according to the measurement configuration information;
sending, by the terminal, a cell measurement result to the source base station when the terminal satisfies a measurement report condition;
receiving, by the terminal, a handover configuration message that is sent by the source base station according to the cell measurement result, wherein the handover configuration message carries handover configuration information, and the handover configuration information is used by the terminal to perform cell handover; and
performing, by the terminal, cell handover according to the handover configuration information when the terminal receives a handover instruction message that is sent by the source base station when the source base station determines that the terminal needs to perform cell handover, wherein the handover instruction message is used to instruct the terminal to perform cell handover according to the handover configuration information, and a length of the handover instruction message is less than a length of the handover configuration message.

21. The method according to claim 20, wherein the handover configuration message further carries handover condition information, the handover condition information is used to indicate a handover condition for performing cell handover by the terminal according to the handover configuration information, and the method further comprises:
sending a handover request message to the source base station when determining that the terminal satisfies the handover condition; and
that the terminal receives a handover instruction message that is sent by the source base station when the source base station determines that the terminal needs to perform cell handover specifically comprises:
receiving, by the terminal, the handover instruction message that is sent by the source base station when the source base station receives the handover request message sent by the terminal.

22. The method according to claim 21, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

23. The method according to any one of claims 20 to 22, before the sending a cell measurement result to the source base station, further comprising:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

24. A handover method, comprising:
sending, by a source base station, a measurement control message to a terminal, wherein the measurement control message carries measurement configuration information, and the measurement configuration information is used by the terminal to perform cell measurement;
receiving, by the source base station, a measurement report message that is sent by the terminal when the terminal satisfies a measurement report condition, and obtaining handover configuration information of a target cell, wherein the measurement report message carries a cell measurement result; and
sending, by the source base station, the handover configuration information and handover condition information to the terminal, wherein the handover configuration information is used by the terminal to perform cell handover, and the handover condition information is used to indicate a handover condition for performing cell handover by the terminal according to the handover configuration information, so that the terminal satisfies the handover condition indicated by the handover indication information, and performs cell handover according to the received handover configuration information.

25. The handover method according to claim 24, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

26. The method according to claim 24 or 25, wherein before the receiving, by the source base station, a measurement report message that is sent by the terminal when the terminal satisfies a measurement report condition, the method further comprises:
receiving a high speed indication that is sent by the terminal and that is of the high-speed moving state, wherein the high speed indication is reported when a moving speed of the terminal reaches a specified speed threshold, or when a moving speed of the terminal reaches a specified speed threshold and duration in which the moving speed of the terminal reaches the specified speed threshold reaches specified duration.

27. A handover method, comprising:
sending, by a source base station, measurement configuration information to a terminal, wherein the measurement configuration information is used by the terminal to perform cell measurement;
receiving, by the source base station, a measurement report message that is sent by the terminal when the terminal satisfies a measurement report condition, and obtaining handover configuration information of a target cell, wherein the measurement report message carries a cell measurement result;
sending, by the source base station, a handover configuration message to the terminal, wherein the handover configuration message carries the handover configuration information, and the handover configuration information is used by the terminal to perform cell handover; and
sending, by the source base station, a handover instruction message to the terminal when the base station determines that the terminal needs to perform cell handover, so that the terminal performs cell handover according to the handover configuration information, wherein the handover instruction message is used to instruct the terminal to perform cell handover according to the handover configuration information, and a length of the handover instruction message is less than a length of the handover configuration message.

28. The method according to claim 27, wherein the handover configuration message further carries handover condition information, and the handover condition information is used to indicate a handover condition for performing cell handover by the terminal according to the handover configuration information; and
the sending, by the source base station, a handover instruction message to the terminal when the base station determines that the terminal needs to perform cell handover comprises:
receiving, by the source base station, a handover request message sent by the terminal, determining that the terminal needs to perform cell handover, and sending the handover instruction message to the terminal, wherein the handover request message is sent by the terminal to the source base station when determining that the terminal satisfies the handover condition.

29. The method according to claim 28, wherein the handover condition comprises at least one of the following conditions:
a preset handover execution time point;
a time point corresponding to a current time point after a preset handover execution time offset value is added to the current time point;
a first preset threshold that needs to be reached by a reference signal received power RSRP value of a signal received by the terminal;
a second preset threshold that needs to be reached by a difference between an RSRP value of a signal most recently received by the terminal and an RSRP value of a previously received signal;
a third preset threshold that needs to be reached by a reference signal received quality RSRQ value of a signal received by the terminal; or
a fourth preset threshold that needs to be reached by a difference between an RSRQ value of a signal most recently received by the terminal and an RSRQ value of a previously received signal.

30. The method according to any one of claims 27 to 29, before the measurement report message is sent to the source base station when it is determined that a measurement condition is satisfied, further comprising:
when a moving speed of the terminal reaches a specified speed threshold, or when a moving speed of the terminal reaches a specified speed threshold and duration in which the moving speed of the terminal reaches the specified speed threshold reaches specified duration, determining that the terminal is in a high-speed moving state; and sending a high speed indication indicating that the terminal is in the high-speed moving state to the source base station.

31. A bearer setup method, comprising:
sending indication information to a mobility management entity MME when it is determined that a bearer of a delay-sensitive service needs to be set up, wherein the indication information is used to indicate that the bearer of the delay-sensitive service needs to be set up, so that after receiving the indication information sent by the MME, a base station sets up the bearer of the delay-sensitive service, and the bearer of the delay-sensitive service is not actively released by the base station.

32. A bearer setup method, comprising:
receiving indication information indicating that a terminal needs to set up a bearer of a delay-sensitive service; and
setting up the bearer of the delay-sensitive service with the terminal according to the received indication information, wherein the bearer of the delay-sensitive service is not actively released.
